(19) Europäisches Patentamt

European Patent Office

Office européen des brevets

(11) **EP 1 054 908 B1**

(12) **EUROPÄISCHE PATENTSCHRIFT**

(45) Veröffentlichungstag und Bekanntmachung des Hinweises auf die Patenterteilung:
**23.04.2003  Patentblatt 2003/17**

(21) Anmeldenummer: **99910198.3**

(22) Anmeldetag: **05.02.1999**

(51) Int Cl.[7]: **C08F 4/46**, C08F 4/54

(86) Internationale Anmeldenummer:
**PCT/EP99/00771**

(87) Internationale Veröffentlichungsnummer:
**WO 99/042491 (26.08.1999 Gazette 1999/34)**

(54) **VERFAHREN ZUR HERSTELLUNG EINER INITIATORZUSAMMENSETZUNG ZUR RETARDIERTEN ANIONISCHEN POLYMERISATION**

METHOD FOR THE PRODUCTION OF AN INITIATOR COMPOSITION FOR RETARDED ANIONIC POLYMERIZATION

PROCEDE DE FABRICATION D'UNE COMPOSITION D'INITIATEUR POUR POLYMERISATION ANIONIQUE RETARDEE

(84) Benannte Vertragsstaaten:
**DE**

(30) Priorität: **18.02.1998  DE 19806772**

(43) Veröffentlichungstag der Anmeldung:
**29.11.2000  Patentblatt 2000/48**

(73) Patentinhaber: **BASF AKTIENGESELLSCHAFT 67056 Ludwigshafen (DE)**

(72) Erfinder:
- **SCHADE, Christian
  D-67061 Ludwigshafen (DE)**
- **FISCHER, Wolfgang
  D-69190 Walldorf (DE)**
- **GAUSEPOHL, Hermann
  D-67112 Mutterstadt (DE)**
- **JÜNGLING, Stephan
  D-68165 Mannheim (DE)**
- **WARZELHAN, Volker
  D-67273 Weisenheim (DE)**
- **FONTANILLE, Michel
  F-33400 Talence (FR)**
- **DEFFIEUX, Alain
  F-33402 Talence Cedex (FR)**
- **DESBOIS, Philippe
  D-67487 Maikammer (DE)**

(56) Entgegenhaltungen:
DE-A- 2 628 380        US-A- 3 716 495

EP 1 054 908 B1

**Beschreibung**

Die Erfindung betrifft ein Verfahren zur Herstellung einer Initiatorzusammensetzung enthaltend ein Alkalimetallorganyl und ein Aluminiumorganyl sowie ein Verfahren zur Polymerisation von anionisch polymerisierbaren Monomeren.

Die anionische Polymerisation verläuft in der Regel sehr schnell, so daß ein Kontrolle wegen der beträchtlichen Wärmeentwicklung im technischen Maßstab schwierig wird. Erniedrigt man die Polymerisationstemperatur, so steigt die Viskosität insbesondere bei konzentrierten Lösungen zu stark an. Eine Verringerung der Initiatorkonzentration erhöht das Molekulargewicht des gebildeten Polymers. Eine Kontrolle der Reaktion durch eine entsprechende Verdünnung der Monomeren führt zu einem höheren Lösemittelbedarf und zu geringeren Raum-Zeitausbeuten.

Es wurden daher verschiedene Zusätze zu den anionischen Polymerisationsinitiatoren vorgeschlagen, die die Polymerisationsgeschwindigkeit beeinflussen.

Über den Einfluß von Lewissäuren und Lewisbasen auf die Geschwindigkeit der anionischen Polymerisation von Styrol wurde in Welch, Journal of the American Chemical Society, Vol 82 (1960), Seite 6000 - 6005 berichtet. So wurde gefunden, daß geringe Mengen von Lewis-Basen wie Ether und Amine die durch n-Butyllithium initiierte Polymerisation von Styrol bei 30°C in Benzol beschleunigen, wohingegen Lewis-Säuren wie Zink- und Aluminiumalkyle die Polymerisationsgeschwindigkeit reduzieren bzw. in überstöchiometrischen Mengen die Polymerisation zum Stillstand bringen.

Aus der US-Patentschrift 3 716 495 sind Initiatorzusammensetzungen für die Polymerisation von konjugierten Dienen und Vinylaromaten bekannt, bei denen eine effektivere Nutzung des Lithiumalkyls als Initiator durch den Zusatz eines Metallalkyls eines Metalls der Gruppe 2a, 2b oder 3a des Periodensystems, wie beispielsweise Diethylzink und polare Verbindungen wie Ether oder Amine erreicht wird. Die Art der Zugabe der einzelnen Initiatorkomponenten in das Polymerisationssystem sei unkritisch.

Die nicht vorveröffentlichte Patentanmeldung PCT/EP97/04497 beschreibt kontinuierliche Verfahren zur anionischen Polymerisation oder Copolymerisation von Styrol- oder Dienmonomeren mit Alkalimetallalkyl als Polymerisationsauslöser in Gegenwart eines mindestens zweiwertig auftretenden Elements als Geschwindigkeitsregler.

Zur Polymerisation von konjugierten Dienen mit hoher 1,4-trans-Verknüpfung sind beispielsweise aus der EP-A 0 234 512 verschiedene Initiatormischungen bekannt, die Alkali-, Erdalkali-, Aluminium, Zink oder Seltenerdmetalle enthalten können. Die deutsche Offenlegungsschrift 26 28 380 lehrt z. B. die Verwendung von Erdalkalialuminaten als Cokatalysator zu einem lithiumorganischen Initiator zur Herstellung von Polymerisaten oder Copolymerisaten von kunjugierten Dienen mit einem hohen Gehalt an trans-1,4-Bindungen und geringen Gehalten an 1,2- oder 3,4-Bindungen. Dies soll zu einer Erhöhung der Polymerisationsgeschwindigkeit führen.

Die Verwendung von Zusätzen wie Aluminiumalkylen, die stark retardierend auf die anionische Polymerisation wirken, erfordert eine exakte Dosierung und Temperaturkontrolle. Eine geringe Unterdosierung kann zu einer ungenügenden Verlangsamung der Reaktionsgeschwindigkeit, eine geringe Überdosierung aber zum Stillstand der Polymerisation führen.

Bei getrennter Zugabe oder nur unzureichender Vermischung der einzelnen Initiatorkomponenten zu einer Monomerlösung kann es insbesondere bei hohen Monomerkonzentrationen zu einer unzureichenden Verteilung und damit zu lokal unterschiedlichen Konzentrationen der einzelnen Initiatorkomponenten kommen. Bevor sich eine homogenen Verteilung der Initiatorkomponenten einstellen kann, kann in einzelnen Bereichen die Polymerisation schon initiiert werden, während in anderen Bereichen die Polymerisation stark retardiert wird oder noch nicht beginnt. Hierdurch können starke lokale Temperaturerhöhungen und nicht reproduzierbare Molekulargewichtsverteilungen auftreten.

Aufgabe der Erfindung war es, ein Verfahren zur Herstellung einer Initiatorzusammensetzung enthaltend ein Alkalimetallorganyl und ein Aluminiumorganyl zu finden, das eine hinsichtlich der Polymerisationsgeschwindigkeit und Molekulargewichtsverteilung reproduzierbare Polymerisation von anionisch polymerisierbaren Monomeren, insbesondere von Styrol gewährleistet.

Demgemäß wurde ein Verfahren zur Herstellung einer Initiatorzusammensetzung enthaltend ein Alkalimetallorganyl und ein Aluminiumorganyl gefunden, wobei man die in inerten Kohlenwasserstoffen gelösten Metallorganyle homogen vermischt und bei einer Temperatur im Bereich von 0 bis 120°C mindestens 2 Minuten reifen läßt.

Die so hergestellte Initiatorzusammensetzung eignet sich hervorragend zur Polymerisation anionisch polymerisierbarer Monomerer.

Als Alkalimetallorganyl können die üblicherweise als anionische Polymerisationsinitiatoren eingesetzten mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol. Die benötigte Menge an Alkalimetallorganyl richtet sich nach dem gewünschten Molekulargewicht, der Art und Menge der weiteren, eingesetzten Metallorganyle sowie der Polymerisationstemperatur. In der Regel liegt sie im Bereich von 0,0001 bis 5 Molprozent bezogen auf Gesamtmonomerenmenge.

Als Aluminiumorganyle können solche der Formel $R_3Al$ verwendet werden, wobei die Reste R unabhängig voneinander Wasserstoff, Halogen, $C_1$-$C_{20}$-Alkyl oder $C_6$-$C_{20}$-Aryl bedeuten. Bevorzugte Aluminiumorganyle sind die Aluminiumtrialkyle wie Triethylaluminium, Tri-iso-butylaluminium, Tri-n-butylaluminium, Triisopropylaluminium, Tri-n-hexylaluminium. Besonders bevorzugt wird Triisobutylaluminium eingesetzt. Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen oder die Alkoholat-, Thiolat-, Amid-, Imid-, oder Phosphide-Gruppen tragen. Beispiele sind Diethylaluminium -(N,N-dibutylamid), Diethylaluminium-ethoxid, Diisobutylaluminium-ethoxid, Diisobutyl-(2,6-di-tert.-butyl-4-methylphenoxy)aluminium (CAS-Nr. 56252-56-3), Methylaluminoxan, isobutyliertes Methylaluminoxan, Isobutylaluminoxan, Tetraisobutyldialuminoxan oder Bis(diisobutyl)aluminiumoxid.

Die molaren Verhältnisse der Metallorganyle untereinander können in weiten Grenzen variieren und richten sich vor allem nach der gewünschten Retardierungswirkung, der Polymerisationstemperatur, der Monomerzusammensetzung und -konzentration sowie dem gewünschten Molekulargewicht.

Zweckmäßigerweise liegt das molare Verhältnis von Aluminium zu Alkalimetall im Bereich von 0,2 bis 4.

Bei dem erfindungsgemäßen Verfahren werden hauptsächlich Alkalimetallorganyle und Aluminiumorganyle, gegebenenfalls Magnesiumorganyle eingesetzt. Bevorzugt sind Barium- Calcium- oder Strontiumorganyle nur in unwirksamen Mengen vorhanden, die die Polymerisationsgeschwindigkeit oder Copolymerisationsparameter nur unwesentlich beeinflussen. Auch sollen Übergangsmetalle oder Lanthanoide, insbesondere Titan nicht in wesentlichen Mengen zugegen sein.

Als inerter Kohlenwasserstoff kann ein inerter aliphatischer, cycloaliphatischer oder aromatischer Kohlenwasserstoff verwendet werden. Bevorzugt werden die Lösungsmittel eingesetzt, in denen die Metallalkyle als Lösung im Handel erhältlich sind. Besonders bevorzugt werden Pentan, Hexan, Heptan, Cyclohexan, Ethylbenzol oder Toluol verwendet.

Zweckmäßigerweise werden die Initiatorkomponenten in den im Handel erhältlichen Lösungskonzentrationen verwendet oder zwecks schnellerer Gleichgewichtseinstellung in weiter verdünnter Form. Bevorzugt wird eine Konzentration, bei der die Summe aller Metallorganyle im Bereich von 0,01 bis 2 mol/l, bezogen auf die Initiatorzusammensetzung, beträgt.

Die Temperatur hängt von der Konzentration, der Art der Metallorganyle und dem Lösungsmittel ab. In der Regel ist der gesamte Temperaturbereich zwischen Gefrierpunkt und Siedepunkt der Mischung geeignet. Zweckmäßigerweise arbeitet man im Bereich von 0 bis 120°C, bevorzugt im Bereich von 20 bis 80°C.

Die Reifung oder Alterung der Metallorganyle ist wichtig für den reproduzierbaren Einsatz in der anionischen Polymerisation. Versuche haben gezeigt, daß Initiatorlösungen, die getrennt oder nur kurz vor der Polymerisationsinitiierung vermischt werden, schlecht reproduzierbare Polymerisationsbedingungen und Polymereigenschaften hervorrufen. Der beobachtete Alterungsprozeß ist vermutlich auf eine Komplexbildung der Metallorganyle zurückzuführen, die langsamer als der Mischungvorgang abläuft. Für die oben angegebenen Konzentrations- und Temperaturbereich reicht in der Regel eine Reifungszeit von etwa 2 Minuten aus. Bevorzugt läßt man die homogene Mischung mindestens 5 Minuten insbesondere mindestens 20 Minuten reifen. Es ist in der Regel aber auch nicht abträglich, wenn man die homogene Mischung mehrere Stunden, z.B. 1 bis 480 Stunden reifen läßt.

Bei dem erfindungsgemäßen Verfahren ist es auch möglich daß man zusätzlich Styrol zugibt. In diesem Fall erhält man ein oligomeres Polystyrylanion, an dessen Kettenende die Metallorganyle komplexiert sind. Bevorzugt verwendet man Styrol in Mengen im Bereich von 10 bis 1000 mol %, bezogen auf das Alkalimetallorganyl.

Die Mischung der Initiatorkomponenten kann in jedem Mischaggregat durchgeführt werden, vorzugsweise in solchen, die mit Inertgas beaufschlagt werden können. Beispielsweise eignen sich Rührreaktoren mit Ankerrührer oder Schüttelbehälter. Für die kontinuierliche Herstellung eigen sich besonders beheizbare Rohre mit statischen Mischelementen. Der Mischvorgang ist für eine homogene Vermischung der Initiatorkomponenten notwendig. Während der Reifung kann aber muß nicht weitergemischt werden. Die Reifung kann auch in einem kontinuierlich durchströmten Rührkessel oder in einem Rohrabschnitt erfolgen, dessen Volumen zusammen mit der Durchströmgeschwindigkeit die Reifezeit festlegt.

Die Initatorzusammensetzungen eignen sich zur Polymerisation von anionisch polymerisierbaren Monomeren. Bevorzugt wird die Initiatorzusammensetzung zur Homopolymerisation oder Copolymerisation von vinylaromatischen Monomeren und Dienen eingesetzt. Bevorzugte Monomere sind Styrol, α-Methylstyrol, p-Methylstyrol, Ethylstyrol, tert.-Butylstyrol, Vinyltoluol oder 1,1-Diphenylethylen, Butadien, Isopren, 2,3-Dimethylbutadien, 1,3-Pentadien, 1,3-Hexadiene oder Piperylen oder deren Mischungen.

Die benötigte Menge der Inititatorzusammensetzung richtet sich nach dem gewünschten Molekulargewicht, der Art und Menge der neben dem Alkalimetallorganyl eingesetzten, weiteren Metallorganyle sowie der Polymerisationstemperatur. In der Regel liegt sie im Bereich von 0,0001 bis 5 Molprozent bezogen auf den Alkalimetallorganylanteil und die Gesamtmonomerenmenge.

Die Polymerisation kann in Gegenwart eines Lösungsmittels vorgenommen werden. Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Oktan, Dekalin, Benzol, Alkylbenzole wie Toluol, Xylol, Ethylbenzol oder Cumol oder geeignete Gemische. Das Lösungsmittel sollte natürlich die verfahrenstypisch erforderliche hohe Reinheit aufweisen. Zur Abtrennung protonenaktiver Substanzen können sie beispielsweise über Aluminiumoxid oder Molekularsieb getrocknet und/oder vor Verwendung destilliert werden. Vorzugsweise wird das Lösungsmittel aus dem Verfahren nach Kondensation und der genannten Reinigung wiederverwendet.

Durch die Zusammensetzung und Menge der Metallorganyle ist es möglich, die Retardierungswirkung in weiten Temperaturbereichen einzustellen. So kann auch bei anfänglichen Monomerkonzentrationen im Bereich von 50 bis 100 Volumenprozent, insbesondere von 70 bis 100 Volumenprozent polymerisiert werden, die zu hochviskosen Polymerlösungen führen und zumindest bei höheren Umsätzen höhere Temperaturen verlangen.

Nach Beendigung der Polymerisation können die lebenden Polymerketten mit einem Kettenabbruchmittel verschlossen werden. Als Kettenabbruchmittel eignen sich protonenaktive Substanzen oder Lewissäuren wie beispielsweise Wasser, Alkohole, aliphatische und aromatische Carbonsäuren sowie anorganische Säuren wie Kohlensäure oder Borsäure.

Die Zielprodukte können Homopolymerisate oder Copolymerisate sowie deren Mischungen sein. Bevorzugt werden Polystyrol sowie Styrol-Butadien-Blockcopolymerisate erhalten. Es ist auch möglich, mit dem erfindungsgemäßen Verfahren schlagzähes Polystyrol (HIPS) herzustellen, wobei als Kautschuke Polybutadien, Styrol-Butadien-Blockcopolymerisate oder Mischungen davon eingesetzt werden können.

Zur Kopplung der Blockcopolymeren können mehrfunktionelle Verbindungen wie beispielsweise polyfunktionelle Aldehyde, Ketone, Ester, Anhydride oder Epoxide eingesetzt werden.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das erfindungsgemäße Verfahren führt je nach Wahl der Initiatorkonzentration und -zusammensetzung, des speziell angewandten Verfahrensablaufs und anderer Parameter, wie Temperatur und evlt. Temperaturverlauf zu Polymerisaten mit hohem oder niedrigem Molgewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein. Vorzugsweise wird das Verfahren kontinuierlich durchgeführt.

Mit den nach dem erfindungsgemäßen Verfahren hergestellten Initiatorzusammensetzungen läßt sich die Polymerisation von anionisch polymerisierbaren Monomeren, insbesondere Styrol sehr gut kontrollieren und reproduzierbare Polymereigenschaften erzielen.

Beispiele:

Herstellung der Initiatorlösung I1:

8 ml einer 1,6 molaren s-Butyllithiumlösung (sBuLi) in Cyclohexan (Fa. Aldrich) und 6,4 ml einer 1,6 molaren Lösung von Triisobutylaluminium (TIBA) in Toluol (Fa. Witco) wurden bei 25°C zusammengegeben und vor der Verwendung 10 Stunden gerührt.

Beispiel 1

In einen 2,35 l Rührkessel mit Ankerrührer wurden unter Stickstoff 800 g Styrol und 200 g Toluol vorgelegt und unter Rühren auf 85°C erwärmt. Nach Erreichen dieser Temperatur wurde die Initiatorlösung I1 (molares Verhältnis Li/Al = 1/0,85) zugegeben und die Polymerisationslösung bei 85°C gehalten. Der Umsatz betrug nach 25 min 29 %. Nach 60 Minuten bei 85°C wurde die Polymerisation durch Zugabe von 4 ml Ethanol bei einem Umsatz von 52 % abgebrochen. Man erhielt eine viskose Polystyrollösung mit einem zahlenmittleren Molekulargewicht von Mn = 54340 g/mol und einer Uneinheitlichkeit der Verteilung von Mw/Mn = 1,29.

Vergleichsversuch 1

Beispiel 1 wurde wiederholt mit dem Unterschied, daß die Komponenten der Initiatorlösung I1 zusammengegeben und innerhalb von weniger als 1 Minute der Monomerlösung zugegeben wurde. Die Polymerisationsmischung erwärmte sich innerhalb von 5 Minuten auf 213°C.

Beispiel 2:

Zu 30 ml Cyclohexan wurden 1,5 ml sec-Butyllithium (1,3 M in Cyclohexan) und 2,3 ml Styrol gegeben und vier Stunden gerührt. Anschließend wurden 1,66 ml einer 1 M Lösung von Triisobutylaluminium in Cyclohexan zugegeben (molares Verhältnis Al/Li = 0,85) und die Lösung weitere 4 h bei Raumtemperatur (25°C) gerührt. Je 2,5 ml dieser Lösung und 10 ml Styrol wurden in Glasampullen überführt, abgeschmolzen und in einem Wärmebad bei 150°C gelagert. Die Ampullen wurden zu unterschiedlichen Zeiten geöffnet und die Polymerisation durch Zugabe von Ethanol abgestoppt. Aus der erhaltenen Zeit/Umsatz-Kurve wurde eine Halbwertszeit für die Styrolumsetzung bei 150°C von 1 min ermittelt.

Beispiel 3:

Beispiel 2 wurde wiederholt mit dem Unterschied, daß 1,86 ml einer 1 M Lösung von Triisobutylaluminium in Cyclohexan verwendet wurde (molares Verhältnis Al/Li = 0,95). Die Halbwertszeit bei 150°C betrug über einer Stunde.

Vergleichsversuch 2

Zu 200 ml Cyclohexan wurden 0,75 ml einer sec.-Butyllithiumlösung (1,3 M in Cyclohexan) und 0,6 ml Styrol gegeben und vier Stunden gerührt. 30 m1 dieser Lösung wurde in einen 100 ml fassenden Kolben mit einer angeschmolzenen UV-Zelle transferiert. Die Konzentration des Polystyryllithiums wurde UV-spektroskopisch zu [PS-Li] = 4,8 * 10$^{-3}$ M bestimmt. Zu dieser Lösung wurde eine Mischung aus 3,6 ml einer 0,06 M Lösung von Et$_2$AlOEt in Cyclohexan (molares Verhältnis Al/Li = 1,5) und 2,5 ml Styrol gegeben. Die Abnahme der Styrol-Konzentration wurde bei 100°C UV-spektroskopisch verfolgt und nach einer Geschwindigkeitsgleichung erster Ordnung ausgewertet:

$$\ln([Styrol]_0/[Styrol]) = k_a * t$$

Die erhaltene Auftragung war nicht linear. Die Steigung der Kurve nahm über die Zeit ab. Gegen Ende der Umsetzung betrug die Steigung $k_a$ = 0,0035 min$^{-1}$. Daraus und aus der Konzentration an Polystyryllithium, [PS-Li], wurde eine Reaktionsgeschwindigkeitskonstante $k_p$ =$k_a$/[PS-Li]$^{0,5}$ > 0,05 M$^{-0,5}$ min$^{-1}$ ermittelt.

Beispiel 4

Zu 30 ml einer Lösung von Polystyryllithium in Cyclohexan mit einer UV-spektroskopisch bestimmten Konzentration von [PS-Li] = 6,2 * 10$^{-3}$ M wurden 6,2 ml einer 0,06 M Lösung von Et$_2$AlOEt in Cyclohexan gegeben und 1 h bei 100°C gerührt (molares Verhältnis Al/Li = 1,5). Anschließend wurden weitere 2,5 ml Styrol zugegeben. Die Abnahme der Styrol-Konzentration wurde bei 100°C UV-spektroskopisch verfolgt und wie in Vergleichsbeispiel 2 ausgewertet. Die Auftragung von ln ([Styrol]$_0$/[Styrol]) gegen die Zeit war über den ganzen Umsatzbereich linear. Die Steigung der Geraden betrug $k_a$ = 2,6 * 10$^{-4}$ min$^{-1}$. Aus diesem Wert und der Konzentration [PS-Li] wurde eine Reaktionsgeschwindigkeitskonstante $k_p$ = 0,0033 M$^{-0,5}$ min$^{-1}$ berechnet.

Beispiel 5

Zu 200 ml Cyclohexan wurden 1,2 ml einer sec.-Butyllithiumlösung (1,3 M in Cyclohexan) und 0,9 ml trockenen Styrols gegeben und für vier Stunden gerührt.

30 ml dieser Lösung wurden in einen 100 ml fassenden Kolben transferiert, der mit einer angeschmolzenen UV-Zelle ausgestattet war. Die Konzentration des Polystyryllithiums wurde UV-spektroskopisch zu [PS-Li]=7,2 * 10$^{-3}$ M bestimmt. Zu dieser Lösung wurden 2,3 ml einer 0,08 M Lösung von Triisobutylaluminium in Cyclohexan gegeben (molares Verhältnis Al/Li = 0,85). Das UV/VIS-Spektrum der Lösung wurde bei Raumtemperatur in der UV-Zelle verfolgt.

Man beobachtete ein Extinktionsmaximum bei 287 nm, das über eine Zeitdauer von 2 h um 20 % wuchs. Eine bei ca. 330 nm auftretende Schulter war nach dieser Zeit fast völlig verschwunden; die entsprechende Extinktion nahm über diesen Zeitraum auf ca. 64 % des Ausgangswertes ab.

Beispiel 6

In einen 1 l Rührkessel mit Ankerrührer wurden unter Stickstoffatmosphäre 120 g Styrol und 480 g Toluol vorgelegt und unter Rühren auf 80°C erwärmt. Parallel wurden in einer Ampulle 10 ml Toluol und 0,5 ml Styrol mit 1,51 ml einer 1,6 molaren s-Butyllithiumlösung in Cyclohexan und nach 10 min mit 1,42 ml einer 1,6 molaren Lösung von Triisobutylaluminium in Toluol versetzt. Die Mischung wurde 5 min bei 80°C getempert und anschließend in den Rührkessel gegeben. Bei einer konstanten Temperatur von 80°C betrug der Styrolumsatz nach 60 min 14 %, nach 115 min 36 % und nach 181 min 63 %. Nach 360 min wurde die Polymerisation bei einem Umsatz von 92 % durch Zugabe von 4 ml Ethanol abgebrochen.

Vergleichsversuch 3

In einen 1 l Rührkessel mit Ankerrührer wurden unter Stickstoffatmosphäre 120 g Styrol und 480 g Toluol vorgelegt und unter Rühren auf 60°C erwärmt. Nach Erreichen der Temperatur wurden gleichzeitig aber getrennt voneinander 1,51 ml einer 1,6 molaren s-Butyllithiumlösung in Cyclohexan und 1,42 ml einer 1,6 molaren Lösung von Triisobutylaluminium in Toluol zugegeben. Nach 3 Minuten betrug der Umsatz 51 % und die Temperatur war auf 77 °C angestiegen. Nach 5 min betrug der Umsatz 61 % und die Temperatur 72°C, nach 40 min betrug der Umsatz 83% und die Temperatur 60°C.

Beispiel 7

Für die kontinuierliche Polymerisation wurde ein doppelwandiger, 2 l Rührkessel mit einem Standard-Ankerrührer verwendet. Der Reaktor war für einen Druck von 60 bar ausgelegt und mit einem Wärmeträgermedium für eine isotherme Polymerisationsführung temperiert. Die Initiatorkomponenten wurden über eine gemeinsame Zuleitung mit einem statischen Mischer dosiert. Die Zuleitung faßte 160 ml, wobei eine Teilstrecke mit 100 ml auf 80°C gehalten wurde.

In dem Rührkessel wurden kontinuierlich 800 g/h Styrol und eine über eine gemeinsame Zuleitung vorgemischte Initiatorlösung aus 26 ml/h einer 0,16 molaren s-Butyllithiumlösung in Cyclohexan/Toluol (1/9), 24,7 ml/h einer 0,16 molaren Lösung von Triisobutylaluminium in Toluol, 180 g/h Toluol und 24 g/h einer 10 gew.-%igen Lösung von Styrol in Toluol (molares Verhältnis Li/Al = 1/0,92) dosiert und bei einer Massetemperatur von 104°C gerührt (100 Umdrehungen pro Minute). Der Austrag des Rührkessels wurde in einen gerührten, 4 Liter fassenden Turmreaktor weitergefördert, der bei einer Innentemperatur von 109°C betrieben wurde. Der Austrag des Reaktors wurde einem zweiten 4 Liter fassenden Turmreaktor zugeführt. Über zwei gleich lange, nacheinander angeordnete Heizzonen wurde die Temperatur so eingestellt, daß die Innentemperatur am Ende der ersten Zone 140°C, am Ende der zweiten Zone 158°C betrug. Am Austritt des Turmreaktors wurde die Polymerisationsmischung über einen Mischer mit 20 g/h einer 10 Gew.-%igen Lösung aus Methanol in Toluol versetzt, anschließend durch ein auf 260°C beheiztes Rohrstück geführt und über ein Druckregelventil in einen auf 25 mbar gehaltenen Vakuumtopf entspannt. Die Schmelze wurde mit einer Schnecke ausgetragen und granuliert.

Nach wenigen Stunden stellte sich ein stabiler Gleichgewichtszustand in allen Anlagenteilen ein. Der Druckabfall über die gesamte Anlage betrug 2,2 bar. Der Feststoffgehalt am Ausgang des Rührkessels betrug 13,5 Gew.-%, am Ausgang des Turmreaktors 40,4 Gew.-%. Am Austrag wurde ein vollständiger Monomerumsatz festgestellt. Es wurde ein Polystyrol mit einem Molekulargewicht von Mw = 167.000 g/mol und einer Uneinheitlichkeit Mw/Mn von 2,62 erhalten. Die Verteilung war monomodal. Es wurde ein Gehalt von unter 10 ppm Styrol, unter 10 ppm Ethylbenzol und 92 ppm Toluol bestimmt.

Vergleichsversuch 4:

Beispiel 7 wurde wiederholt, mit dem Unterschied, daß über getrennte Zuleitungen 26 ml/h einer einer 0,16 molaren s-Butyllithiumlösung in Cyclohexan/Toluol (1/9), 24,7 ml/h einer 0,16 molaren Lösung von Triisobutylaluminium in Toluol und 180 g/h Toluol (molares Verhältnis Li/Al = 0,95) dosiert wurden. Bei dem Versuch, den Feststoffgehalt am Ausgang des Rührkessels auf 13,5 Gew.-% einzustellen, mußte die Temperatur auf 83°C abgesenkt werden. Im Verlauf mehrerer Tage schwankte der Feststoffgehalt im Rührkessel im Bereich von 3 - 25 Gew.-%. Die Massetemperatur konnte dabei nicht konstant auf 83°C gehalten werden. Proben aus dem Rührkessel zeigten stark schwankende Molekulargewichtsverteilungen und teilweise bi -oder multimodale Verteilungen.

Beispiel 8

Die Initiatorkomponenten wurden über ein Mischelement auf eine 4 m lange, temperierbare Wendel gegeben. Die Wendel hatte ein Volumen von 12,6 ml und führte an den Reaktionskessel.

In dem Rührkessel aus Beispiel 7 wurden kontinuierlich 800 g/h Styrol, 180 g/h Toluol und eine über die gemeinsame Zuleitung vorgemischte Initiatorlösung aus 23 ml/h einer 0,18 molaren s-Butyllithium-lösung in Cyclohexan/Toluol (1/9) und 44,3 ml/h einer 0,086 molaren Lösung von Triisobutylaluminium in Toluol (molares Verhältnis Li/Al = 1/0,92) dosiert und bei einer Massetemperatur von 109°C gerührt (100 Umdrehungen pro Minute). Nach wenigen Stunden stellte sich ein konstanter Fahrzustand ein. Der Feststoffgehalt betrug 14 %.

Vergleichsversuch 5

Beispiel 8 wurde wiederhalt, mit dem Unterschied, daß die Metallalkyle über eine nur 0,9 ml fassende Zuleitung zum Kessel geführt wurden. Binnen weniger Stunden stieg der Feststoffgehalt im Kessel auf 41 % an. Es erwies sich als schwierig, den Feststoffgehalt im Rührkessel und die Massetemperatur konstant zu halten.

**Patentansprüche**

1. Verfahren zur Herstellung einer Initiatorzusammensetzung enthaltend ein Alkalimetallorganyl und ein Aluminiumorganyl, dadurch gekennzeichent, daß man die in inerten Kohlenwasserstoffen gelösten Metallorganyle homogen vermischt und bei einer Temperatur im Bereich von 0 bis 120°C mindestens 2 Minuten reifen läßt.

2. Verfahren nach Anspruch 1, **dadurch gekennzeichnet, daß** man als Alkalimetallorganyl ein Lithiumorganyl einsetzt.

3. Verfahren nach Anspruch 1 oder 2, **dadurch gekennzeichnet, daß** man als inerten Kohlenwasserstoff, Pentan, Hexan, Heptan, Cyclohexan, Ethylbenzol oder Toluol verwendet.

4. Verfahren nach den Ansprüchen 1 bis 3, **dadurch gekennzeichnet, daß** man die Konzentration der Summe aller Metallorganyle im Bereich von 0,01 bis 2 mol/l, bezogen auf die Initiatorzusammensetzung, wählt.

5. Verfahren nach den Ansprüchen 1 bis 4, **dadurch gekennzeichnet, daß** man das molare Verhältnis von Aluminium zu Alkalimetall im Bereich von 0,2 bis 4 wählt.

**6.** Verfahren nach den Ansprüchen 1 bis 5, **dadurch gekennzeichnet, daß** man zusätzlich Styrol in Mengen im Bereich von 10 bis 1000 mol %, bezogen auf das Alkalimetallorganyl, zugibt.

**7.** Verfahren zur Polymerisation anionisch polymerisierbarer Monomerer, **dadurch gekennzeichnet, daß** man eine Initiator-Zusammensetzung nach einem Verfahren der Ansprüche 1 bis 6 herstellt, und anschließend die Polymerisation in Gegenwart der auf diese Weise hergestellten Initiatorzusammensetzung durchführt.

**8.** Verfahren zur Polymerisation von Styrol nach Anspruch 7.

**Claims**

**1.** A process for the preparation of an initiator composition comprising an alkali metal organyl and an aluminum organyl, which comprises homogeneously mixing the metal organyls, dissolved in inert hydrocarbons, and aging at a temperature in the range from 0 to 120°C for at least 2 minutes.

**2.** A process as claimed in claim 1, wherein the alkali metal organyl used is a lithium organyl.

**3.** A process as claimed in claim 1 or 2, wherein the inert hydrocarbon used is pentane, hexane, heptane, cyclohexane, ethylbenzene or toluene.

**4.** A process as claimed in any of claims 1 to 3, wherein the concentration of the sum of all metal organyls is in the range from 0.01 to 2 mol/l, based on the initiator composition.

**5.** A process as claimed in any of claims 1 to 4, wherein the molar ratio of aluminum to alkali metal is in the range from 0.2 to 4.

**6.** A process as claimed in any of claims 1 to 5, wherein additionally styrene is added in an amount in the range from 10 to 1000 mol%, based on the alkali metal organyl.

**7.** A process for the polymerization of anionically polymerizable monomers, which comprises preparing an initiator composition by a process of claims 1 to 6 and then polymerizing in the presence of the initiator composition prepared in this way.

**8.** A process for the polymerization of styrene as claimed in claim 7.

**Revendications**

**1.** Procédé pour la préparation d'une composition d'initiateur, contenant un organyle de métal alcalin et un organyle d'aluminium, **caractérisé par le fait qu'**on mélange de manière homogène les organyl-métaux dissous dans des hydrocarbures inertes et on effectue la maturation à une température dans l'intervalle de 0 à 120°C pendant au moins 2 minutes.

**2.** Procédé selon la revendication 1, **caractérisé par le fait qu'**on met en oeuvre comme organyle de métal alcalin un organyl-lithium.

**3.** Procédé selon la revendication 1 ou 2, **caractérisé par le fait qu'**on utilise comme hydrocarbure inerte le pentane, l'hexane, l'heptane, le cyclohexane, l'éthylbenzène ou le toluène.

**4.** Procédé selon les revendications 1 à 3, **caractérisé par le fait qu'**on choisit la concentration de la somme de tous les organyl-métaux dans l'intervalle de 0,01 à 2 mol/l, par rapport à la composition d'initiateur.

**5.** Procédé selon les revendications 1 à 4, **caractérisé par le fait qu'**on choisit le rapport molaire de l'aluminium au métal alcalin dans l'intervalle de 0,2 à 4.

**6.** Procédé selon les revendications 1 à 5, **caractérisé par le fait qu'**on ajoute en outre du styrène en des quantités dans l'intervalle de 10 à 1000 % en moles, par rapport à l'organyl-métal alcalin.

**7.** Procédé pour la polymérisation de monomères polymérisables par voie anionique, **caractérisé par le fait qu'**on prépare une composition d'initiateur conformément à un procédé selon les revendications 1 à 6, et on effectue ensuite la polymérisation en présence de la composition d'initiateur préparée de cette manière.

**8.** Procédé pour la polymérisation de styrène selon la revendication 7.